# EUROPÄISCHE PATENTANMELDUNG

(11) **EP 4 596 320 A1**
(43) Veröffentlichungstag der Anmeldung: **06.08.2025**
(21) Anmeldenummer: 24223357.5
(22) Anmeldetag: 27.12.2024
(51) Int. Cl.: B60P 1/36, B60P 1/38, B60P 3/00, B65G 43/08, B65G 33/02, B64F 1/36

(54) **STÜCKGUTTRANSPORTFAHRZEUG UND BETRIEBSVERFAHREN FÜR EIN STÜCKGUTTRANSPORTFAHRZEUG**

(30) Priorität: 31.01.2024 DE 102024102806
(71) Anmelder: insensiv GmbH, 33619 Bielefeld (DE)
(72) Erfinder: Gieselmann, Christian, 33739 Bielefeld (DE)
(74) Vertreter: Wickord, Wiro

(57) **Zusammenfassung**

Die Erfindung betrifft ein Stückguttransportfahrzeug (1) mit einer Stückgutbevorratungsvorrichtung (2) umfassend einen Gurtförderer (3) mit einem ersten umlaufenden Fördergurt (10), wobei der erste umlaufende Fördergurt (10) ein dem Transport und der Bevorratung des Stückguts (31, 32) dienendes Obertrum (11) aufweist, mit einer Antriebseinheit (6) zum Antreiben des ersten umlaufenden Fördergurts (10) und mit einer Steuereinheit zum Betätigen der Antriebseinheit (6), wobei das Obertrum (11) des ersten umlaufenden Fördergurts (10) abschnittsweise schraubenförmig um wenigstens 360° gewunden verläuft, wobei die Antriebseinheit (6) eingerichtet ist, den ersten umlaufenden Fördergurt (10) intermittierend anzutreiben, und wobei eine Distanzerfassungseinheit vorgesehen ist, die eingerichtet ist, eine Bewegungsdistanz des Obertrums (11) in eine Förderrichtung (13) zu erfassen. Ferner betrifft die Erfindung ein Betriebsverfahren für ein Stückguttransportfahrzeug (1) sowie dessen Verwendung bei der Gepäckbeförderung am Flughafen und/oder bei der Paketbeförderung.

## Beschreibung

Die Erfindung betrifft ein Stückguttransportfahrzeug mit einer Stückgutbevorratungsvorrichtung umfassend einen Gurtförderer mit einem ersten umlaufenden Fördergurt, wobei der erste umlaufende Fördergurt ein dem Transport und der Bevorratung des Stückguts dienendes Obertrum aufweist, mit einer Antriebseinheit zum Antreiben des ersten umlaufenden Fördergurts und mit einer Steuereinheit zum Betätigen der Antriebseinheit. Ferner betrifft die Erfindung ein Betriebsverfahren für ein Stückguttransportfahrzeug.

Ein gattungsgemäßes Stückguttransportfahrzeug ist aus der DE 20 2004 000 247 U1 bekannt. Das Stückguttransportfahrzeug sieht eine Vielzahl von in Reihe angeordneten Schrägförderbändern vor. Jeweils zwei benachbarte Schrägförderbänder sind über eine 180°-Umlenkeinheit miteinander verbunden. Das Stückguttransportfahrzeug dient dem Transport und der Bevorratung von Gepäck am Flughafen.

Die Aufgabe der vorliegenden Erfindung besteht darin, ein verbessertes Stückguttransportfahrzeug und ein Verfahren zum Betrieb eines Stückguttransportfahrzeugs anzugeben.

Zur Lösung der Aufgabe ist die Erfindung in Verbindung mit dem Oberbegriff des Patentanspruchs 1 dadurch gekennzeichnet, dass das Obertrum des ersten umlaufenden Fördergurts abschnittsweise schraubenförmig um wenigstens 360° gewunden verläuft, dass die Antriebseinheit eingerichtet ist, den ersten umlaufenden Fördergurt intermittierend anzutreiben, und dass eine Distanzerfassungseinheit vorgesehen ist, die eingerichtet ist, eine Bewegungsdistanz des Obertrums in eine Förderrichtung zu erfassen.

Der besondere Vorteil der Erfindung besteht darin, dass durch das Vorsehen des Spiralfördergurts die Anzahl der Fördergurte insgesamt und damit die Komplexität des Gurtförderers sowie die Komplexität der Antriebstechnik deutlich reduziert werden kann. Hierdurch reduzieren sich die Kosten des Stückguttransportfahrzeugs und einer Fehlfunktion ist entgegengewirkt. Zudem gelingt es, das Stückgut aktiv im Bogen beziehungsweise Kreis zu fördern. Passive Teilförderstrecken, in denen ein Stückgut durch ein folgendes Stückgut geschoben wird und es damit zum mechanischen Kontakt zwischen den Stückgütern kommt, können vermieden werden. Schließlich ist es so, dass die Spiralförderstrecke von 360° oder mehr einen sehr kompakten Aufbau des Gutförderers erlaubt mit der Folge, dass das Stückgut platzsparend bevorratet werden kann.

Das Vorsehen einer Antriebseinheit, die den ersten umlaufenden Fördergurt intermittierend, das heißt in einem Start-Stop-Betrieb antreibt, erlaubt es, das Stückgut in einer engen Folge und zugleich beabstandet zueinander auf das Obertrum aufzubringen und zu bevorraten. Das Stückgut wird dazu beispielsweise mittels einer externen Optikeinheit in Bezug auf seine Abmessungen erfasst. Der erste umlaufende Fördergurt des Gurtförderers kann dann stets so angetrieben beziehungsweise gestoppt werden, dass die Stückgüter beim Aufnehmen eng beieinander, aber beabstandet auf dem Obertrum aufliegt. Die externe Optikeinheit kann beispielsweise Teil einer peripheren Transportlogistik, beispielsweise eines ortsfest installierten Fördersystems einer Gepäck- beziehungsweise Pakettransportlogistik sein oder einem Überladeförderband zugeordnet sein, welches dem Beladen des erfindungsgemäßen Stückguttransportfahrzeugs dient.

Die Distanzerfassungseinheit kann beispielsweise eine Lichtschranke vorsehen, um den Transport des Stückguts zu überwachen. Beispielsweise kann die Distanzerfassungseinheit einen Inkrementalgeber vorsehen, um eine Antriebsbewegung zu erfassen.

Ein Stückguttransportfahrzeug im Sinne der Erfindung kann ein angetriebenes, selbst fahrendes Fahrzeug, beispielsweise ein Lastkraftwagen sein. Beispielsweise kann ein gezogenes Fahrzeug, insbesondere ein Anhänger, ein Fahrzeug im Sinne der Erfindung darstellen. Die Stückguttransportvorrichtung kann beispielsweise fest an das Fahrzeug angebaut sein oder als Containerlösung auf ein Fahrgestell aufgesetzt werden und zusammen mit dem Fahrgestell sowie optional weiterer Komponenten das erfindungsgemäße Stückguttransportfahrzeug bilden.

Nach einer bevorzugten Ausführungsform der Erfindung sieht das Stückguttransportfahrzeug eine eigene Sensorik vor, die eingerichtet ist, das Stückgut zu erkennen beziehungsweise zu identifizieren und/oder eine Position des Stückguts auf dem Obertrum des ersten umlaufenden Fördergurts zu erfassen. Die eigene Sensorik arbeitet bevorzugt berührungslos. Insbesondere kann die eigene Sensorik als optisch arbeitende Sensorik ausgebildet sein. Vorteilhaft kann durch das Vorsehen der eigenen Sensorik ein autark arbeitsfähiges Stückguttransportfahrzeug bereitgestellt werden. Das Fahrzeug selbst ist dabei in der Lage, das Stückgut zu identifizieren, seine Größe zu bestimmen und/oder die Position des Stückguts im Fahrzeug zu ermitteln. Die Antriebseinheit des Stückguttransportfahrzeugs kann mit der eigenen Sensorik zusammenarbeiten und von eben dieser Informationen für den intermittierenden Antrieb des ersten umlaufenden Fördergurts erhalten.

Nach einer Weiterbildung der Erfindung ist die Antriebseinheit eingerichtet, den ersten umlaufenden Fördergurt des Gurtförderers unidirektional in die Förderrichtung anzutreiben. Alternativ kann vorgesehen sein, dass der Fördergurt von der Antriebseinheit bidirektional in die Förderrichtung einerseits und in eine Gegenrichtung hierzu angetrieben wird. Bei dem unidirektionalen Antrieb des ersten umlaufenden Fördergurts wird das zuerst in das Fahrzeug eingeladene Stückgut durch das Fahrzeug hindurch transportiert. Beim Entladen des Fahrzeugs wird dieses zuerst aufgenommene Stückgut als erstes Stückgut entladen (First in-First out-Prinzip). Sofern der erste umlaufende Fördergurt bidirektional antreibbar ist, kann durch eine Richtungsumkehr das First in-Last out-Prinzip realisiert werden. Hierbei wird das zuletzt in das Fahrzeug geladene Stückgut nach der Bewegungsumkehr des Fördergurts als erstes Stückgut entladen.

Nach einer Weiterbildung der Erfindung verläuft das Obertrum des ersten umlaufenden Fördergurts abschnittsweise horizontal. Vorteilhaft kann das Obertrum in dem horizontal erstreckten Abschnitt des Fördergurts einfach und sicher beladen beziehungsweise entladen werden.

Nach einer Weiterbildung der Erfindung sieht das Obertrum dort, wo es sich schraubenförmig windet, eine vertikal erstreckte Schraubenachse vor. Vorteilhaft vereinfacht das Vorsehen einer vertikal erstreckten Schraubenachse für das schraubenförmig gewundene Obertrum den konstruktiven Aufbau des Gurtförderers. Zugleich begünstigt es eine optimale Raumnutzung.

Nach einer Weiterbildung der Erfindung sieht das Obertrum des ersten umlaufenden Fördergurts dort, wo es schraubenförmig gewunden ist, eine konstante Ganghöhe, das heißt einen konstanten vertikalen Abstand übereinanderliegender Schraubenbahnen, und/oder einen konstanten Schraubenradius vor. Vorteilhaft begünstigen der konstante Schraubenradius und die konstante Ganghöhe ebenfalls eine gute Raumausnutzung. Zugleich vereinfacht sich hierdurch der konstruktive Aufbau des Stückguttransportfahrzeugs, da eine Vielzahl von Gleichteilen für den Gurtförderer verwendet werden kann, und die Kosten können geringgehalten werden.

Nach einer Weiterbildung der Erfindung sieht der erste umlaufende Gurtförderer einen Rücklauftrum für den ersten umlaufenden Fördergurt vor, der um wenigstens 20% kürzer ausgebildet ist als dessen Obertrum. Vorteilhaft kann durch das Vorsehen des kürzeren Rücklauftrums eine Kostenoptimierung des Gurtförderers erreicht werden. Der Rücklauftrum des ersten umlaufenden Fördergurts erstreckt sich hierbei nicht oder nur abschnittsweise parallel zum Obertrum desselben. Insbesondere kann vorgesehen sein, dass der Rücklauftrum nicht schraubenförmig gewunden verläuft.

Nach einer Weiterbildung der Erfindung kann das Obertrum des ersten umlaufenden Fördergurts um wenigstens 720° und bevorzugt um 1.080° oder mehr gewunden verlaufen. Vorteilhaft verbessert sich hierdurch die Raumausnutzung weiter.

Im Sinne der Erfindung ist das Obertrum des ersten umlaufenden Fördergurts dann um 360° oder mehr schraubenförmig gewunden, wenn ein einziger umlaufender Gurt genutzt und über den Winkelbereich von 360° oder mehr gewunden ist. Die schraubenförmige Windung des Obertrums kann beispielsweise unterbrochen sein, indem das Obertrum abschnittsweise geraden Streckenabschnitte vorsieht. Hierbei ist es egal, ob das Obertrum im Bereich der geraden Streckenabschnitte horizontal oder vertikal und/oder schräg verläuft.

Nach einer Weiterbildung der Erfindung sieht der Gurtförderer den ersten umlaufenden Fördergurt sowie einen zweiten umlaufenden Fördergurt vor. Der zweite umlaufende Fördergurt sieht wie der erste umlaufende Fördergurt einen Obertrum für den Transport und die Bevorratung des Stückguts und darüber hinaus einen Rücklauftrum vor. Der zweite umlaufende Fördergurt ist dem ersten umlaufenden Fördergurt derart zugeordnet, dass das Stückgut von dem ersten umlaufenden Fördergurt auf den zweiten umlaufenden Fördergurt gelangt und/oder zurück. Insbesondere kann vorgesehen sein, dass auch der zweite umlaufende Fördergurt abschnittsweise schraubenförmig um wenigstens 360° gewunden verläuft und/oder das Rücklauftrum des zweiten umlaufenden Fördergurts um wenigstens 20% kürzer ausgebildet ist als das Obertrum des zweiten umlaufenden Fördergurts.

Der erste umlaufende Fördergurt und/oder der zweite umlaufende Fördergurt können beispielsweise einteilig nach Art eines Riemens aus einem elastischen beziehungsweise verformbaren Material, insbesondere einem Kunststoff oder einem textilen Material ausgebildet sein. Beispielsweise können der erste umlaufende Fördergurt und/oder der zweite umlaufende Fördergurt mehrteilig beziehungsweise segmentiert ausgebildet sein. Einzelne Segmente des ersten und/oder zweiten umlaufenden Fördergurts können dabei zueinander verschieb- und schwenkbar und/oder anderweitig relativ beweglich zueinander angeordnet sein. Die Segmente können beispielsweise aus einem metallischen Werkstoff bestehen.

Die Antriebseinheit des erfindungsgemäßen Stückguttransportfahrzeugs kann eingerichtet sein, den ersten umlaufenden Fördergurt und zugleich auch den zweiten umlaufenden Fördergurt anzutreiben. Die Fördergurte können getrennt voneinander und individuell oder gemeinsam angetrieben sein.

Nach einer Weiterbildung der Erfindung können der erste umlaufende Fördergurt und der zweite umlaufende Fördergurt des Gurtförderers einander spiegelsymmetrisch zugeordnet sein. Diese spiegelsymmetrische Zuordnung der Fördergurte zueinander begünstigt einen kompakten Aufbau und zugleich eine kostengünstige Realisierung durch die Verwendung einer Vielzahl von Gleichteilen.

Nach einer Weiterbildung der Erfindung kann vorgesehen sein, dass der erste umlaufende Fördergurt und der zweite umlaufende Fördergurt jeweils eine vertikal erstreckte Schraubenachse vorsehen, dass der erste umlaufende Fördergurt das Stückgut vertikal nach oben transportiert und der zweite umlaufende Fördergurt das Stückgut nach unten fördert.

Nach einer Weiterbildung der Erfindung ist dem Obertrum des ersten umlaufenden Fördergurts und/oder dem Obertrum des zweiten umlaufenden Fördergurts ein Anschlag für das Stückgut zugeordnet. Vorteilhaft kann durch das Vorsehen des Anschlags verhindert werden, dass das Stückgut endseitig über den Gurtförderer hinaus gefördert wird und insbesondere vom Obertrum fällt. Der Anschlag dient insofern als Nothalt. Er kann beispielsweise über eine Sensorik verfügen, die den Antrieb des Fördergurts unterbricht.

Nach einer Weiterbildung der Erfindung kann das Stückguttransportfahrzeug Umlenkmittel für das Stückgut vorsehen, welche eingerichtet sind, das Stückgut auf das Obertrum des ersten beziehungsweise zweiten umlaufenden Fördergurts des Gurtförderers aufzubringen und/oder das Stückgut auf dem Obertrum des ersten und/oder zweiten umlaufenden Fördergurts auszurichten und/oder das Stückgut auszuschleusen. Das Umlenkmittel kann beispielsweise als aktives Umlenkmittel ausgebildet sein und aktuatorisch betätigt beziehungsweise geschaltet werden. Beispielsweise kann eine Förderweiche oder ein sogenannter Pusher als aktives Umlenkmittel vorgesehen sein. Alternativ oder zusätzlich können passive Umlenkmittel, beispielsweise Leitelemente, als Umlenkmittel vorgesehen sein, die dem insbesondere seitlichen Führen des Stückguts dienen.

Zur Lösung der Aufgabe weist die Erfindung die Merkmale des Patentanspruchs 11 auf. Demzufolge sieht ein Betriebsverfahren für ein Stückguttransportfahrzeug die folgenden Betriebsverfahrensschritte vor, die in der angegebenen Reihenfolge abgearbeitet werden
a) ein erstes Stückgut wird an einer Beladestelle bereitgestellt;
b) wenigstens ein umlaufender Fördergurt des Gurtförderers wird angetrieben derart, dass ein Obertrum des wenigstens einen Fördergurts in eine Förderrichtung bewegt wird, und eine Distanzerfassung für die Bewegungsdistanz des Obertrums in die Förderrichtung wird aktiviert;
c) das erste Stückgut wird auf das Obertrum des Fördergurts aufgebracht und in die Förderrichtung gefördert;
d) eine Bewegung des wenigstens einen Fördergurts in eine Förderrichtung wird gestoppt, nachdem das auf dem Obertrum des wenigstens einen Fördergurts in eine Förderrichtung geförderte erste Stückgut einen ausreichenden Abstand zu der Beladestation aufweist, und die Distanzerfassung wird deaktiviert;
e) die Schritte a) bis d) werden so lange wiederholt, wie wenigstens ein weiteres Stückgut bereitgestellt ist und die in Summe erfasste Bewegungsdistanz für den Obertrum die Aufnahme wenigstens eines weiteren Stückguts erlaubt;
f) das Stückguttransportfahrzeug wird fortbewegt.

Vorteilhaft kann durch das erfindungsgemäße Betriebsverfahren das Stückgut gleichermaßen kompakt und durch die Beabstandung schonend auf das Obertrum des Gurtförderers geladen, bevorratet und transportiert werden. Der intermittierende Antrieb des Gurtförderers sorgt dabei stets für einen ausreichenden, jedoch individuell und knapp bemessenen Abstand des Stückguts zueinander auf dem Obertrum. Ein berührender Kontakt zwischen benachbartem Stückgut kann insofern ebenso vermieden werden wie ein zu großer Sicherheitsabstand, der letztlich zu einer zu geringen Aufnahmekapazität des Stückguttransportfahrzeugs führen würden.

Nach der Erfindung kann das Stückgut nach dem First in-First out-Prinzip oder nach dem First in-Last out-Prinzip gehandhabt werden. Abhängig ist dies insbesondere von der Art des Antriebs des wenigstens einen umlaufenden Fördergurts. Sofern der Fördergurt nur in eine einzige Förderrichtung angetrieben wird, wird das Stückgut durch das Stückguttransportfahrzeug hindurch gefördert. Das zuerst eingeladene Stückgut wird dann zuerst ausgeladen. Sofern die Bewegungsrichtung des Fördergurts umgekehrt werden kann, kann das zuletzt auf das Obertrum geladene Stückgut nach der Richtungsumkehr als erstes Stückgut entladen werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Stückguttransportfahrzeugs gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine Prinzipskizze einer ersten Ausführungsform eines erfindungsgemäßen Stückguttransportfahrzeugs in einer perspektivischen Vorderseitendarstellung,
- Fig. 2: eine Prinzipskizze einer Vorderseitenansicht des Stückguttransportfahrzeugs nach Fig. 1,
- Fig. 3: eine Prinzipskizze einer perspektivischen Rückseitenansicht des Stückguttransportfahrzeugs nach Fig. 1,
- Fig. 4: eine Prinzipskizze einer zweiten Ausführungsform des erfindungsgemäßen Stückguttransportfahrzeugs in einer perspektivischen Vorderseitendarstellung,
- Fig. 5: eine Prinzipskizze einer Vorderseitenansicht des Stückguttransportfahrzeugs nach Fig. 4,
- Fig. 6: eine Prinzipskizze einer perspektivischen Rückseitenansicht des Stückguttransportfahrzeugs nach Fig. 4,
- Fig. 7: eine Prinzipskizze einer dritten Ausführungsform des erfindungsgemäßen Stückguttransportfahrzeugs in einer perspektivischen Vorderseitendarstellung,
- Fig. 8: eine Prinzipskizze einer Vorderseitenansicht des Stückguttransportfahrzeugs nach Fig. 7 und
- Fig. 9: eine Prinzipskizze einer perspektivischen Rückseitenansicht des Stückguttransportfahrzeugs nach Fig. 7.

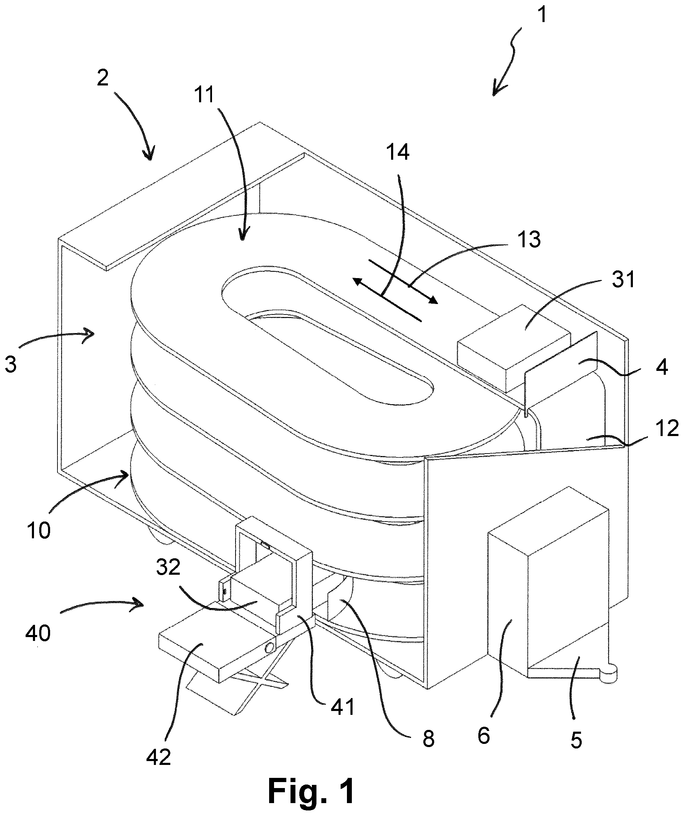

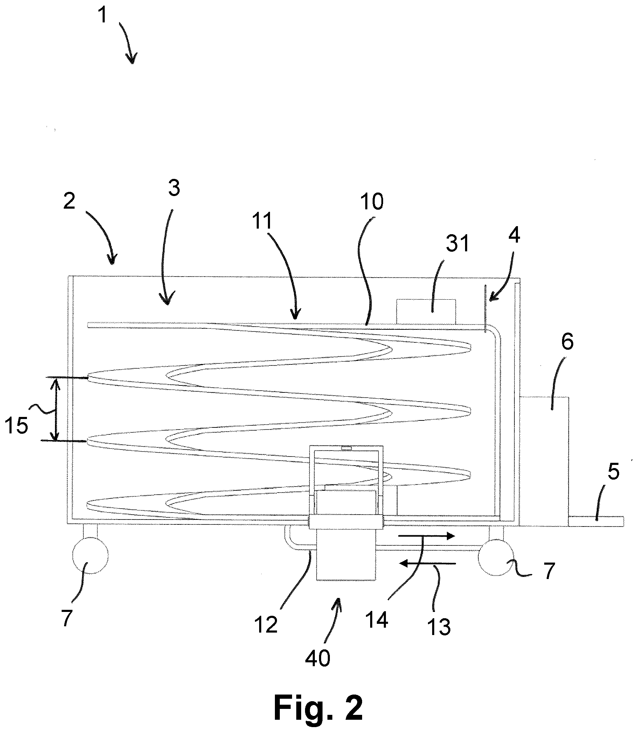

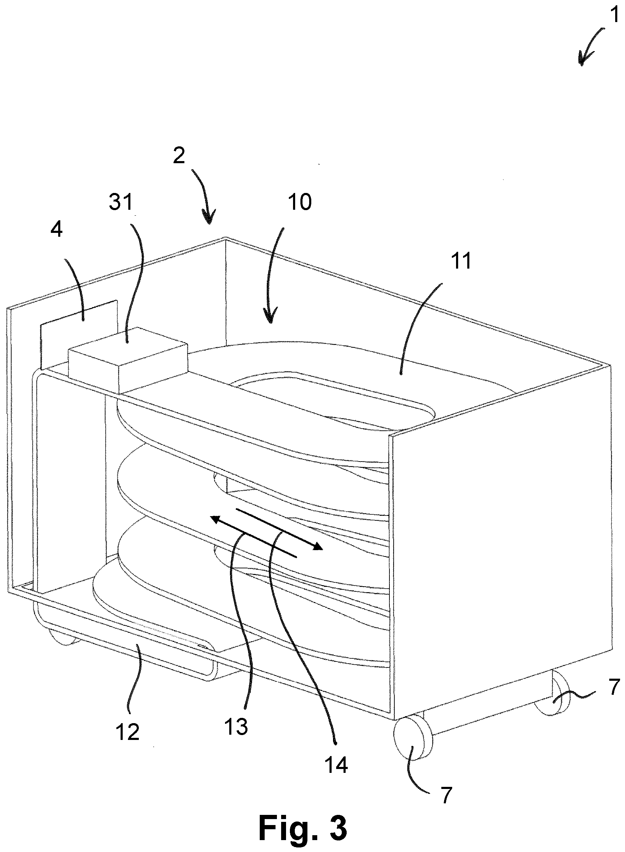

Eine erste Ausführungsform eines Stückguttransportfahrzeugs 1 zeigen die Figuren 1 bis 3. Das Stückguttransportfahrzeug 1 ist nach Art eines Anhängers realisiert, der über ein nicht einzeln dargestelltes Fahrgestell mit einer Deichsel 5 sowie Rädern 7 verfügt. Auf das Fahrgestell ist die Stückgutbevorratungsvorrichtung 2 aufgebaut, die den Gurtförderer 3 sowie die Antriebseinheit 6 und eine nicht dargestellte Distanzerfassungseinheit vorsieht. Die Stückgutbevorratungsvorrichtung 2 sieht ein kastenförmiges Gehäuse für den Gutförderer 3 vor. An das kastenförmige Gehäuse ist die Antriebseinheit 6 exemplarisch oberhalb der Deichsel 5 angebaut.

Der Gurtförderer 3 sieht einen ersten umlaufenden Fördergurt 10 mit einem Obertrum 11 und einem Rücklauftrum 12 vor. Das Obertrum 11 windet sich abschnittsweise schraubenförmig um 7x180°, das heißt zusammen 1.260°. Der erste umlaufende Fördergurt 10 wird dabei von der Antriebseinheit 6 wahlweise in eine Förderrichtung 13 oder eine Gegenrichtung 14 bidirektional angetrieben. Eine Ganghöhe 15 des Obertrums 11 im Bereich der Schraubenabschnitte sowie ein Schraubenradius 16 sind konstant.

Das Rücklauftrum 12 des ersten umlaufenden Fördergurts 10 ist deutlich kürzer als das Obertrum 11. Es verläuft nicht wie bei vielen handelsüblichen Gurtförderern parallel unterhalb des Obertrums. Vielmehr verläuft es abschnittsweise vertikal und horizontal. Das Rücklauftrum 12 sieht einen einzigen schraubenförmigen 180° Bogen vor, der sich in dem vorliegenden Ausführungsbeispiel der Erfindung in einer horizontalen Ebene erstreckt.

Um das Stückgut 31, 32 auf das Obertrum 12 des ersten umlaufenden Fördergurts 10 zu fördern, ist eine Beladestation 40 mit einem bogenförmigen Erfassungstunnel 41 und einem Überladeförderband 42 als eine Übergabestation für das Stückgut 31, 32 vorgesehen. Das Stückgut 31, 32 wird über nicht dargestellte Transportmittel dem Überladeförderband 42 zugeführt und dann von diesem zu der Stückgutbevorratungsvorrichtung 2 des Stückguttransportfahrzeugs 1 gefördert. Es durchläuft dabei den Erfassungstunnel 41 und wird sensorisch erfasst, sodass seine Größe bekannt ist, und auf das Obertrum 11 des in die Förderrichtung 13 angetriebenen ersten umlaufenden Fördergurts 10 aufgebracht. Zur Umlenkung des Stückguts 31, 32 dient das Umlenkmittel 8, welches vorliegend exemplarisch als gebogenes Leitblech realisiert ist.

Beim Beladen des Obertrums 11 des ersten umlaufenden Fördergurts 10 wird mittels der nicht dargestellten Distanzerfassungseinheit die Bewegungsdistanz des Obertrums 11 in die Förderrichtung 13 erfasst. Auf diese Weise ist gewährleistet, dass das Stückgut 31, 32 auf dem Obertrum 11 stets einen ausreichenden Abstand aufweist. Zugleich wird durch die fortlaufende Erfassung der Bewegungsdistanz des Obertrums 11 sichergestellt, dass das Obertrum 11 nicht überladen wird. Zusätzlich sieht die Stückgutbevorratungsvorrichtung 2 nach der ersten Ausführungsform einen Anschlag 4 vor, der eine Bewegung des Stückguts 31, 32 auf dem Obertrum 11 begrenzt und sicherstellt, dass das Stückgut 31, 32 nicht über das Ende des Obertrums 11 hinausgefördert wird.

Lediglich exemplarisch ist in den Zeichnungen die Beladung der Stückgutbevorratungsvorrichtung 2 mit lediglich zwei Stückgütern 31, 32 dargestellt. Die beispielhafte Verwendung von nur zwei Stückgütern 31, 32 dient der Übersichtlichkeit und eröffnet die Möglichkeit, den prinzipiellen Aufbau des ersten umlaufenden Fördergurts 10 zu zeigen. In der Realität ist das Obertrum 11 des ersten umlaufenden Fördergurts 10 mit einer Vielzahl von Stückgütern 31, 32 beladen, die jeweils einen geringen Abstand in die Förderrichtung 13 zueinander aufweisen. Beim Beladen wird dabei ein erstes Stückgut 31 an der im vorliegenden Beispiel externen Beladestation 40 bereitgestellt. Der erste umlaufende Fördergurt 10 des Gurtförderers 3 wird dann so angetrieben, dass das Obertrum 11 in die Förderrichtung 13 bewegt wird. Dabei ist die Distanzerfassung für die Bewegungsdistanz des Obertrums 11 in die Förderrichtung 13 aktiviert. Das erste Stückgut 31 wird dann durch Betätigung des Überladeförderbands 42 auf das Obertrum 11 gefördert und die Bewegung des ersten umlaufenden Fördergurts 10 in die Förderrichtung 13 gestoppt, nachdem das erste Stückgut 31 auf dem Obertrum 11 einen ausreichenden Abstand zu der Beladestation 40 aufweist. Mit dem Stopp des Antriebs des Förderguts 10 wird auch die Distanzerfassung deaktiviert. Die Beladung des Obertrums 11 wird so lange fortgesetzt, wie wenigstens ein weiteres Stückgut 32 an der Beladestation 40 bereitsteht und die in Summe erfasste Bewegungsdistanz für das Obertrum 11 die Aufnahme des weiteren Stückguts 32 erlaubt.

Beim Entladen der Stückgutbevorratungsvorrichtung 2 des Stückguttransportfahrzeugs 1 wird der erste umlaufende Fördergurt 10 in die Gegenrichtung 14 angetrieben und das zuletzt geladene Stückgut 32 zuerst entnommen. Am Ort der Entnahme steht eine Entnahmestation zur Verfügung, die funktional und konstruktiv der Beladestation 40 entsprechen kann.

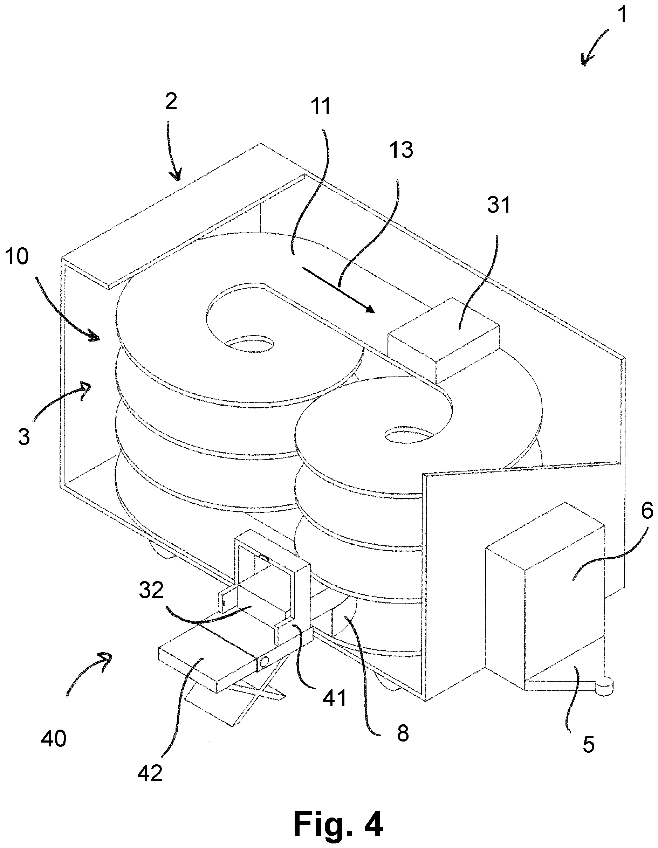

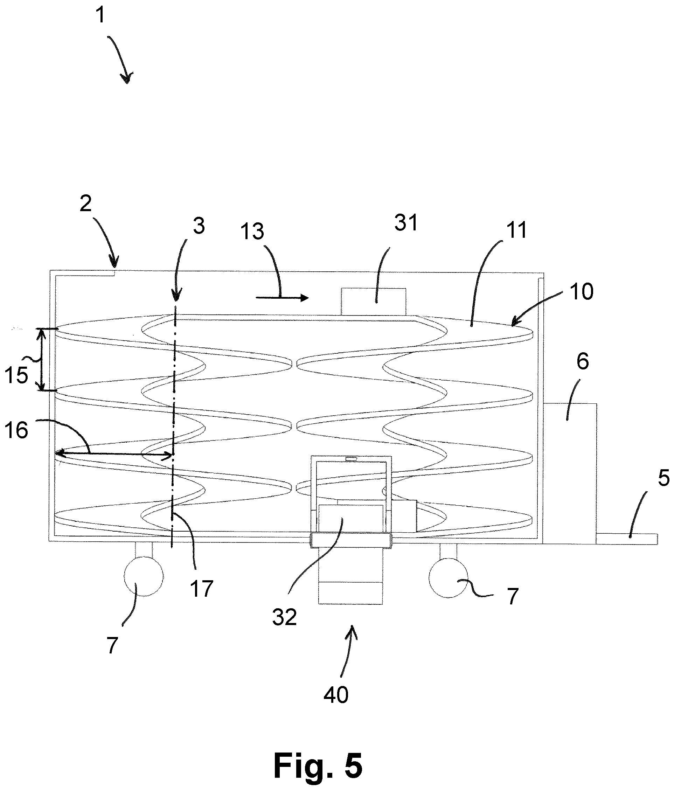

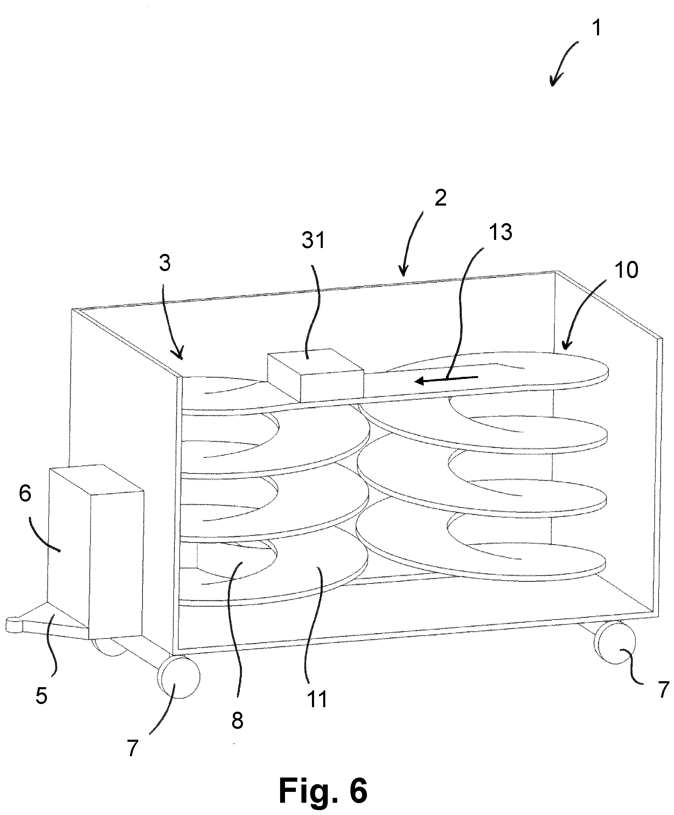

Die Figuren 4 bis 6 zeigen eine zweite Ausführungsform des Stückguttransportfahrzeugs 1. Das Stückguttransportfahrzeug 1 weist nach der zweiten Ausführungsform den ersten umlaufenden Fördergurt 10 als einzigen Fördergurt des Gurtförderers 3 auf. Der erste umlaufende Fördergurt 10 sieht ein Obertrum 11 vor, welches sich in einem ersten Schraubenabschnitt um 1.260° schraubenförmig nach oben windet und dann horizontal in die Förderrichtung 13 verläuft. Es schließt sich an den horizontalen Abschnitt ein zweiter Schraubenabschnitt des Obertrums 11 an, über den das Stückgut 31, 32 in Schraubenlinien nach unten gefördert wird.

Das Beladen der Stückgutbevorratungsvorrichtung 2 des Stückguttransportfahrzeugs 1 erfolgt wie gehabt unter Verwendung der Beladestation 40. Das Umlenkmittel 8 ist vorliegend jedoch als aktives Umlenkmittel betätigbar und insbesondere verschwenkbar angeordnet. Das Stückgut 31, 32, welches ausschließlich in die Förderrichtung 13 gefördert wird, wird nach einem Verschwenken des Umlenkmittels 8 an dem Umlenkmittel 8 entlanggeführt und gelangt zu der nicht dargestellten Entnahmestation.

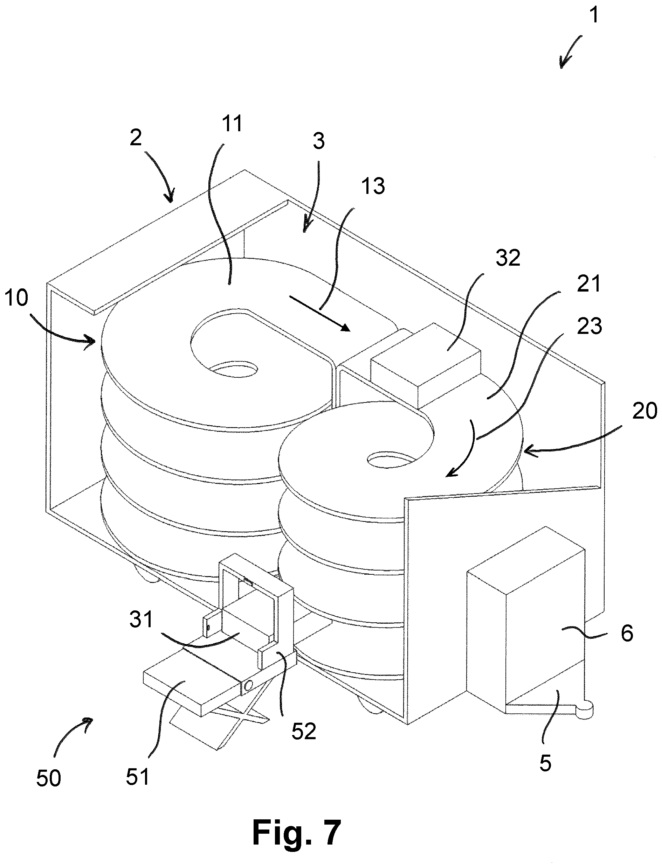

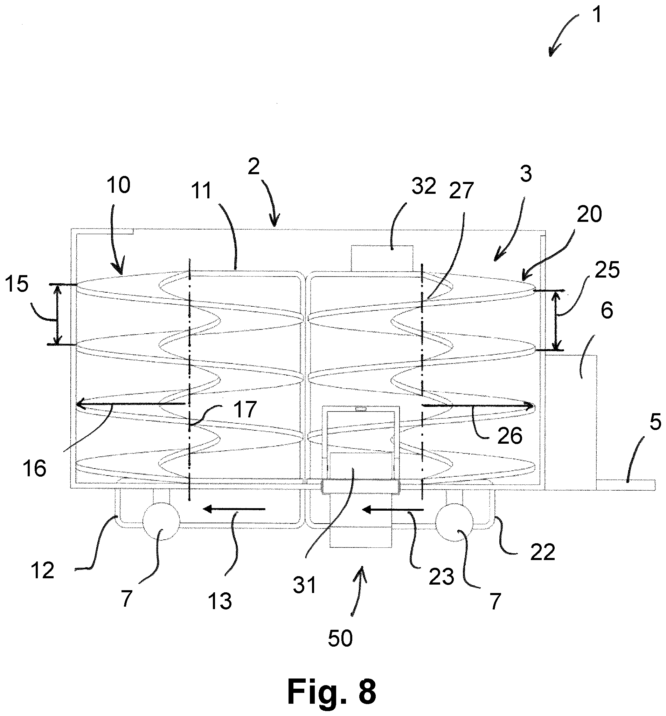

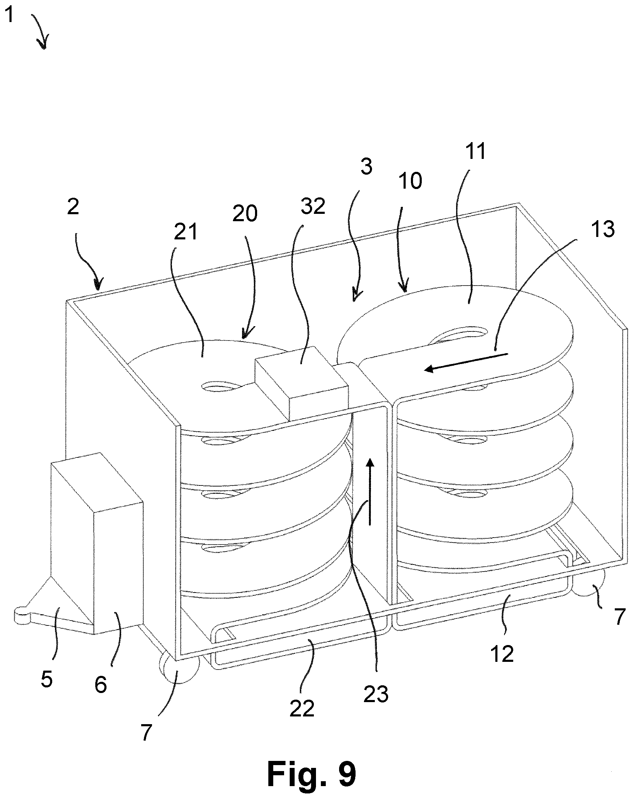

Nach einer dritten Ausführungsform gemäß der Figuren 7 bis 9 sieht der Gurtförderer 3 der Stückgutbevorratungsvorrichtung 2 des Stückguttransportfahrzeugs 1 einen ersten umlaufenden Fördergurt 10 sowie einen zweiten umlaufenden Fördergurt 20 mit jeweils einem Obertrum 11, 21 sowie einem Rücklauftrum 12, 22 vor. Der erste umlaufende Fördergurt 10 und der zweite umlaufende Fördergurt 20 werden jeweils in die Förderrichtung 13, 23 angetrieben. Der erste umlaufende Fördergurt 10 und der zweite umlaufende Fördergurt 20 sind einander spiegelsymmetrisch so zugeordnet, dass das Stückgut 31, 32 auf das Obertrum 11 des ersten umlaufenden Fördergurts 10 aufgebracht und dort transportiert wird. Es wird von dem Obertrum 11 des ersten umlaufenden Fördergurts 10 auf das Obertrum 21 des zweiten umlaufenden Fördergurts 20 übergeben. Ein Ende des Obertrums 11 des ersten umlaufenden Fördergurts 10 ist insofern stirnseitig einem Anfang des Obertrums 21 des zweiten umlaufenden Fördergurts 20 zugeordnet. Auf dem Obertrum 21 des zweiten umlaufenden Fördergurts 20 aufliegend wird das Stückgut 31, 32 im weiteren Verlauf einer externen Entnahmestation 50 zugeführt, die als eine weitere Übergabestation für das Stückgut 31, 32 dient und wie die Beladestation 40 ein Überladeförderband 52 sowie einen Erfassungstunnel 51 zur insbesondere berührungslosen Identifikation des Stückguts 31, 32 vorsieht.

Nach den vorstehend beschriebenen Ausführungsformen sehen die Beladestation 40 und die Entnahmestation 50 jeweils einen Erfassungstunnel 41, 51 als sensorische Komponente zur optischen Erfassung einer Größe des Stückguts 31, 32 und zur Identifikation des Stückguts 31, 32 vor. Nach einer alternativen Ausführungsform der Erfindung kann das Stückguttransportfahrzeug 1 selbst eine Sensorik vorsehen, die der Erkennung und/oder Vermessung und/oder Identifikation des Stückguts 31, 32 dient oder geeignet ist, eine Position des Stückguts 31, 32 auf dem Obertrum 11, 21 des ersten und/oder zweiten umlaufenden Fördergurts 10, 20 zu erfassen. Diese Sensorik arbeitet bevorzugt berührungslos. Sie ist insbesondere als optische Sensorik ausgebildet.

Gleiche Bauteile und Bauteilfunktionen sind durch gleiche Bezugszeichen gekennzeichnet.

### Bezugszeichenliste

- 1: Stückguttransportfahrzeug
- 2: Stückgutbevorratungsvorrichtung
- 3: Gurtförderer
- 4: Anschlag
- 5: Deichsel
- 6: Antriebseinheit
- 7: Räder
- 8: Umlenkmittel
- 10: Fördergurt
- 11: Obertrum
- 12: Rücklauftrum
- 13: Förderrichtung
- 14: Gegenrichtung
- 15: Ganghöhe
- 16: Schraubenradius
- 17: Schraubenachse
- 20: Fördergurt
- 21: Obertrum
- 22: Rücklauftrum
- 23: Förderrichtung
- 25: Ganghöhe
- 26: Schraubenradius
- 27: Schraubenachse
- 31: Stückgut
- 32: Stückgut
- 40: Beladestation
- 41: Erfassungstunnel
- 42: Überladeförderband
- 50: Entnahmestation
- 51: Erfassungstunnel
- 52: Überladeförderband

## Patentansprüche

1. Stückguttransportfahrzeug (1) mit einer Stückgutbevorratungsvorrichtung (2) umfassend einen Gurtförderer (3) mit einem ersten umlaufenden Fördergurt (10), wobei der erste umlaufende Fördergurt (10) ein dem Transport und der Bevorratung des Stückguts (31, 32) dienendes Obertrum (11) aufweist, mit einer Antriebseinheit (6) zum Antreiben des ersten umlaufenden Fördergurts (10) und mit einer Steuereinheit zum Betätigen der Antriebseinheit (6), **dadurch gekennzeichnet, dass** das Obertrum (11) des ersten umlaufenden Fördergurts (10) abschnittsweise schraubenförmig um wenigstens 360° gewunden verläuft, dass die Antriebseinheit (6) eingerichtet ist, den ersten umlaufenden Fördergurt (10) intermittierend anzutreiben, und dass eine Distanzerfassungseinheit vorgesehen ist, die eingerichtet ist, eine Bewegungsdistanz des Obertrums (11) in eine Förderrichtung (13) zu erfassen.

2. Stückguttransportfahrzeug (1) nach Anspruch 1, **dadurch gekennzeichnet, dass** eine Sensorik vorgesehen ist, welche eingerichtet ist, das Stückgut (31, 32) zu erkennen und/oder zu identifizieren und/oder eine Position des Stückguts (31, 32) auf dem Obertrum (11) des ersten umlaufenden Fördergurts (10) zu erfassen, wobei die Sensorik bevorzugt als eine berührungslos arbeitende Sensorik und besonders bevorzugt als optische Sensorik ausgebildet ist.

3. Stückguttransportfahrzeug (1) nach Anspruch 1 oder 2, **dadurch gekennzeichnet, dass** die Antriebseinheit (6) eingerichtet ist, den ersten umlaufenden Fördergurt (10) des Gurtförderers (3) unidirektional in die Förderrichtung (13) und/oder bidirektional in die Förderrichtung (13) und in eine Gegenrichtung (14) anzutreiben.

4. Stückguttransportfahrzeug (1) nach einem der Ansprüche 1 bis 3, **dadurch gekennzeichnet, dass** das Obertrum (11) des ersten umlaufenden Fördergurts (10) abschnittsweise horizontal erstreckt verläuft und/oder dass das Obertrum (11) dort, wo es sich schraubenförmig windet, eine bevorzugt vertikal erstreckte Schraubenachse (17) definiert.

5. Stückguttransportfahrzeug (1) nach einem der Ansprüche 1 bis 4, **dadurch gekennzeichnet, dass** das Obertrum (11) des ersten umlaufenden Fördergurts (10) dort, wo es sich schraubenförmig windet, eine konstante Ganghöhe (15) und/oder einen konstanten Schraubenradius (16) aufweist und/oder dass ein Rücklauftrum (12) des ersten umlaufenden Fördergurts (10) um wenigstens 20 % kürzer ausgebildet ist als dessen Obertrum (11).

6. Stückguttransportfahrzeug (1) nach einem der Ansprüche 1 bis 5, **dadurch gekennzeichnet, dass** der Gurtförderer (3) den ersten umlaufenden Fördergurt (10) und einen zweiten umlaufenden Fördergurt (20) vorsieht, wobei der zweite umlaufende Fördergurt (20) ein dem Transport und der Bevorratung des Stückguts (31, 32) dienenden Obertrum (21) sowie ein Rücklauftrum (22) aufweist und wobei der zweite umlaufende Fördergurt (20) dem ersten umlaufenden Fördergurt (10) derart zugeordnet ist, dass das Stückgut (31, 32) von dem ersten umlaufenden Fördergurt (10) auf den zweiten umlaufenden Fördergurt (20) gelangt und/oder zurück.

7. Stückguttransportfahrzeug (1) nach Anspruch 6, **dadurch gekennzeichnet, dass** das Obertrum (21) des zweiten umlaufenden Fördergurts (20) abschnittsweise schraubenförmig um wenigstens 360° gewunden verläuft und das Rücklauftrum (22) des zweiten umlaufenden Fördergurts (20) um wenigstens 20 % kürzer ausgebildet ist als der Obertrum (21) des zweiten umlaufenden Fördergurts (20).

8. Stückguttransportfahrzeug (1) nach Anspruch 7, **dadurch gekennzeichnet, dass** der erste umlaufende Fördergurt (10) und der zweite umlaufende Fördergurt (20) spiegelsymmetrisch zueinander angeordnet sind.

9. Stückguttransportfahrzeug (1) nach einem der Ansprüche 1 bis 8, **dadurch gekennzeichnet, dass** dem Obertrum (11, 21) des ersten umlaufenden Fördergurts (10) und/oder des zweiten umlaufenden Fördergurts (20) ein Anschlag (4) für das Stückgut (31, 32) zugeordnet ist.

10. Stückguttransportfahrzeug (1) nach einem der Ansprüche 1 bis 9, **dadurch gekennzeichnet, dass** Umlenkmittel (8) für das Stückgut (31, 32) vorgesehen sind, welche eingerichtet sind, das Stückgut (31, 32) auf das Obertrum (11, 21) des ersten und/oder zweiten umlaufenden Fördergurts (10, 20) des Gurtförderers (3) aufzubringen und/oder auf dem Obertrum (11, 21) des ersten und/oder zweiten umlaufenden Fördergurts (10, 20) des Gurtförderers (3) auszurichten und/oder das Stückgut (31, 32) auszuschleusen.

11. Stückguttransportfahrzeug (1) nach einem der Ansprüche 1 bis 10, **dadurch gekennzeichnet, dass** die Stückgutbevorratungsvorrichtung (2) ein Überladeförderband (42, 52) vorsieht zum Zufördern und/oder Wegfördern des Stückguts (31, 32) zu dem Gurtförderer (3) und/oder dass dem Überladeförderband (42, 52) ein Erfassungstunnel (41, 51) als Sensorik zugeordnet ist.

12. Betriebsverfahren für ein Stückguttransportfahrzeug (1) mit einem Gurtförderer (3), insbesondere für ein Stückguttransportfahrzeug (1) nach einem der Ansprüche 1 bis 11, umfassend die folgenden Betriebsverfahrensschritte, die in der angegebenen Reihenfolge abgearbeitet werden:
a) ein erstes Stückgut (31) wird an einer Beladestelle (40) bereitgestellt;
b) wenigstens ein umlaufender Fördergurt (10, 20) des Gurtförderers (3) wird angetrieben derart, dass ein Obertrum (11, 21) des wenigstens einen Fördergurts (10, 20) in eine Förderrichtung (13, 23) bewegt wird, und eine Distanzerfassung für die Bewegungsdistanz des Obertrums (11, 21) in die Förderrichtung (13, 23) wird aktiviert;
c) das erste Stückgut (31) wird auf das Obertrum (11, 21) des Fördergurts (10, 20) aufgebracht und in die Förderrichtung (13, 23) gefördert;
d) eine Bewegung des wenigstens einen Fördergurts (10, 20) in eine Förderrichtung (13, 23) wird gestoppt, nachdem das auf dem Obertrum (11, 21) des wenigstens einen Fördergurts (10, 20) in eine Förderrichtung (13, 23) geförderte erste Stückgut (31) einen ausreichenden Abstand zu der Beladestelle (40) aufweist, und die Distanzerfassung wird deaktiviert;
e) die Schritte a) bis d) werden so lange wiederholt, wie wenigstens ein weiteres Stückgut (32) bereitgestellt ist und die in Summe erfasste Bewegungsdistanz für den Obertrum (11, 21) die Aufnahme wenigstens eines weiteren Stückguts (32) erlaubt;
f) das Stückguttransportfahrzeug (1) wird fortbewegt.

13. Betriebsverfahren nach Anspruch 12, **dadurch gekennzeichnet, dass** das Stückgut (31, 32) nach der Fortbewegung des Stückguttransportfahrzeugs (1) entladen wird, indem der Obertrum (11) in die Gegenrichtung (14) angetrieben und bewegt wird, wobei die Distanzerfassung aktiviert ist und das Stückgut (31, 32) zu einer Entnahmestation gefördert wird.

14. Betriebsverfahren nach Anspruch 12, **dadurch gekennzeichnet, dass** das Stückgut (31, 32) des Stückguttransportfahrzeugs (1) entladen wird, indem der der Obertrum (11, 21) in die Förderrichtung (13, 23) angetrieben und bewegt wird, wobei die Distanzerfassung aktiviert ist und das Stückgut (31, 32) zu einer Entnahmestelle gefördert wird.

15. Verwendung eines Stückguttransportfahrzeugs (1) nach einem der Ansprüche 1 bis 11 für die Beförderung von Reisegepäck als Stückgut (31, 32) auf Flughäfen und/oder für die Zustellung von Paketen als Stückgut (31, 32).
